# EUROPÄISCHE PATENTSCHRIFT

(11) **EP 3 063 603 B1**
(45) Veröffentlichungstag und Bekanntmachung des Hinweises auf die Patenterteilung: **20.06.2018**
(21) Anmeldenummer: 14781148.3
(22) Anmeldetag: 02.10.2014
(51) Int. Cl.: G06F 3/01, B60K 37/00

(54) **ZUORDNEN EINES HEAD-MOUNTED DISPLAYS ZU EINEM SITZPLATZ IN EINEM FAHRZEUG**
ASSIGNING A HEAD-MOUNTED DISPLAY TO A SEAT IN A VEHICLE
ASSOCIATION D'UN VISIOCASQUE À UNE PLACE ASSISE DANS UN VÉHICULE

(30) Priorität: 28.10.2013 DE 102013221858
(43) Veröffentlichungstag der Anmeldung: 07.09.2016
(73) Patentinhaber: Bayerische Motoren Werke Aktiengesellschaft, 80809 München (DE)
(72) Erfinder: FARID, Mehdi, 80807 München (DE); HABERL, Wolfgang, 81547 München (DE); LAUBER, Felix, 80634 München (DE); SPIESSL, Wolfgang, 85276 Pfaffenhofen (DE)
(86) Internationale Anmeldenummer: PCT/EP2014/071116
(87) Internationale Veröffentlichungsnummer: WO 2015/062804

(56) Entgegenhaltungen:
- WO-A1-2010/110411
- US-A1- 2012 139 816
- US-A1- 2013 147 686
- Hon Lung ET AL: "In-Vehicle Driver Detection Using Mobile Phone Sensors", , 20. April 2011 (2011-04-20), XP055156350, Gefunden im Internet: URL:http://www.ee.duke.edu/files/ece/GWDD2 011_Chu.pdf [gefunden am 2014-12-02]

## Beschreibung

Die Erfindung betrifft eine Vorrichtung zum Zuordnen einer Datenbrille zu einem Sitzplatz in einem Fahrzeug und ein Fahrzeug mit der Vorrichtung sowie eine Datenbrille.

Heutzutage sind Datenbrillen, manchmal auch Head-mounted Displays genannt, bekannt, die eine Anzeige umfassen. Eine Datenbrille wird durch einen Benutzer ähnlich einer gewöhnlichen Brille, die als Sehhilfe verwendet wird, auf dem Kopf getragen. Die Anzeige der Datenbrille befindet sich dabei im Sichtfeld des Trägers. Manche Datenbrillen umfassen eine Anzeige für nur ein Auge, andere Datenbrillen umfassen zwei Teilanzeigen, wobei jedem Auge eine Teilanzeige zugeordnet ist.

Weiterhin ist es bekannt, dass Datenbrillen eine halbtransparente Anzeige umfassen können. Eine solche Anzeige ermöglicht es dem Träger sowohl angezeigte Informationen als auch das Umfeld hinter der Anzeige zu erkennen. Diese Art an Anzeige ist besonders gut zur kontaktanalogen Darstellung von Informationen geeignet. Es sind Datenbrillen bekannt geworden, deren Anzeige nicht im zentralen Sichtfeld des Trägers liegt.

Häufig verfügen Datenbrillen über Sende- und Empfangseinheiten zur drahtlosen Datenübertragung. Typischerweise sind dies Bauelemente zur Nutzung von WLAN (manchmal auch WiFi genannt), Bluetooth oder Bauelemente gemäß einem oder mehreren der Mobilfunkstandards 3GPP, LTE oder nachfolgenden Standards.

Darüber hinaus sind Datenbrillen bekannt geworden, die über Sensoren zur Bestimmung der Lage und/oder Bewegung der Datenbrille im Raum bzw. deren Veränderung verfügen, beispielsweise Beschleunigungssensoren.

Unabhängig davon, ob die Anzeige einer Datenbrille im zentralen oder nicht im zentralen Sichtfeld angeordnet ist, stellen die Darstellungen auf der Anzeige der Datenbrille potentiell eine Ablenkung von anderen Tätigkeiten dar. Dies gilt insbesondere dann, wenn der Träger der Datenbrille als Fahrer ein Fahrzeug führt. Hier kann durch unvermittelt auftauchende Mitteilungen, Grafiken oder Videos die Aufmerksamkeit des Fahrers von seiner Fahraufgabe abgelenkt werden, was die Verkehrssicherheit gefährdet.
Im Falle einer Anzeige einer Datenbrille, die sich im zentralen Sichtfeld des Fahrers befindet, kann sogar die Sicht des Fahrers auf das Verkehrsgeschehen durch Darstellungen der Datenbrille behindert werden. Dies gefährdet ebenfalls die Verkehrssicherheit. Gleichzeitig ist es so, dass die Benutzung einer Datenbrille durch einen Passagier des Fahrzeugs, der nicht der Fahrer ist, im Wesentlichen unbedenklich ist.

Das Dokument US 2013/0147686 A1 offenbart die Verbindung von Datenbrillen mit externen Displays. Dabei kann eine Audio- und/oder visuelle Erfahrung einer Datenbrille auf eine Zielrechenvorrichtung, wie einem Fernseher, Smartphone oder Computer übertragen werden, um dem Benutzer einen nahtlosen Übergang des Inhalts zu der Zielrechenvorrichtung zu ermöglichen. Das Dokument WO2010/110411 offenbart eine Datenbrille die mit Hilfe von Beschleunigungssensoren erkennen kann, ober der Träger steht, sitzt oder liegt. Die Aufgabe, die der Erfindung zugrunde liegt, ist es somit, die Benutzung der Datenbrille durch den Fahrer eines Fahrzeugs oder einen anderen Passagier des Fahrzeugs zu unterscheiden.
Die Aufgabe wird durch eine Vorrichtung für ein Fahrzeug, ein Fahrzeug und eine korrespondierende Datenbrille gemäß den unabhängigen Patentansprüchen gelöst. Vorteilhafte Weiterentwicklungen sind in den abhängigen Ansprüchen definiert.
In einem Aspekt umfasst eine Vorrichtung für ein Fahrzeug zum Zuordnen einer Datenbrille zu einem Sitzplatz in dem Fahrzeug, Folgendes: Erkennungsmittel zum Erkennen der Belegung eines Sitzplatzes von mehreren Sitzplätzen des Fahrzeugs; Eine Sende- und Empfangseinrichtung zum Empfangen von Daten von Datenbrillen; Elektronische Rechenmittel; Wobei die Vorrichtung zu Folgendem eingerichtet ist: Erkennen der Sitzbelegung, nämlich, dass der Sitzplatz des Fahrzeugs von einer Person belegt wird; Empfangen, von der Datenbrille, eines Belegungshinweises, nämlich eines Hinweises, dass eine Bewegung der Datenbrille erkannt wurde, die darauf hindeutet, dass der Träger der Datenbrille sich auf einen Sitzplatz gesetzt hat; Feststellen eines zeitlichen Zusammenhangs zwischen dem Erkennen der Sitzbelegung und dem Belegungshinweis; Zuordnen der Datenbrille zu dem Sitzplatz. Der zeitliche Zusammenhang kann zwischen dem Zeitpunkt der Erkennung der Sitzbelegung und dem Zeitpunkt des Empfang des Belegungshinweises bestimmt werden, oder alternativ zwischen dem Zeitpunkt der Erkennung der Sitzbelegung und einem dem Belegungshinweis zugeordneten Zeitpunkt, der den Zeitpunkt der Erkennung einer Bewegung der Datenbrille entspricht, die auf ein Hinsetzen des Trägers deutet.

Die hier vorgeschlagene Lösung sieht vor, dass die Datenbrille, die ins Fahrzeug verbracht wird, einerseits in einem Datenaustausch mit der Vorrichtung steht (beispielsweise über Bluetooth oder WLAN) und andererseits über Bewegungssensoren (insbesondere Beschleunigungssensoren) verfügt. Die Ausgaben der Bewegungssensoren werden daraufhin untersucht, ob eine Bewegung der Datenbrille erkennbar ist, die darauf schließen lässt, dass sich der Träger der Datenbrille in einen Fahrzeugsitz setzt. Dabei können als Basis typische Bewegungsmuster des Kopfes beim Hinsetzen dienen. Es wird der Zeitpunkt festgehalten, zu dem die Sitzbewegung erkannt wurde oder zu dem ein Hinweis auf die Erkennung der Sitzbelegung empfangen wurde. Ebenso überwacht die Vorrichtung, ob eine Belegung eines Fahrzeugsitzes über eine Sitzmatte oder eine Innenraumkamera feststellbar ist. Wird eine Belegung erkannt, so wird deren Zeitpunkt festgehalten. Es wird überprüft, ob ein zeitlicher Zusammenhang zwischen den Zeitpunkten der Belegungserkennung durch die Vorrichtung und durch die Datenbrille besteht. Dies kann z.B. dann gegeben sein, wenn beide Zeitpunkte weniger als ein Schwellwert (z.B. 0,2s; 1s; 2s; 5s) auseinanderliegen. Die Datenbrille wird demjenigen Sitz des Fahrzeugs zugeordnet, für den der zeitliche Zusammenhang festgestellt wurde. Es wird somit ermöglicht, festzustellen, ob der Träger der Datenbrille auf dem Fahrersitz sitzt oder auf einem anderen Sitz des Fahrzeugs. Gegebenenfalls können dann Maßnahmen eingeleitet werden. Auf diese Weise wird die Erhöhung der Verkehrssicherheit ermöglicht, weil die Verwendung einer Datenbrille auf dem Fahrersitz erkannt werden kann.

Die Sende- und Empfangseinrichtung kann ein WLAN Modul sein, insbesondere ein Hotspot, ein Bluetooth-Modul oder eine Station für mobile Datenübertragung gemäß dem 3GPP, LTE oder nachfolgenden Standards. Die Datenbrille verfügt über entsprechende Mittel zur drahtlosen Datenübertragung. Die elektronischen Rechenmittel können ein Mikrocontroller oder ein Prozessor oder ähnliches sein. Die Innenraumkamera kann auch über elektronische Verarbeitungsmittel verfügen, die dazu eingerichtet sind, zu erkennen, ob eine Person einen Sitzplatz belegt. Eine Sitzbelegungsmatte ist typischerweise in der Sitzfläche eines Sitzes integriert und registriert, die Anwesenheit einer Person.

In einer Weiterbildung umfasst eine Vorrichtung nach einem der vorhergehenden Ansprüche ferner: Feststellen, dass der Sitzplatz, der der Datenbrille zugeordnet ist, der Fahrersitzplatz des Fahrzeugs ist; Empfangen, von der Datenbrille, der Angabe, dass die Datenbrille gemäß einer vordefinierten Funktionsweise arbeitet; In Antwort auf das Empfangen der Angabe: Übertragen von Daten bezüglich der Funktion des Fahrzeugs zu der Datenbrille bzw. zum Fahrtzustand des Fahrzeugs. Die vordefinierte Funktionsweise bedeutet insbesondere, dass die auf der Anzeige der Datenbrille dargestellten Inhalte an die Anforderungen beim Führen eines Fahrzeugs angepasst sind. Mit anderen Worten: Die Datenbrille zeigt in dieser Funktionsweise keine Inhalte im zentralen Sichtbereich des Trägers an, ablenkende oder überraschende Darstellungen werden vermieden. Des Weiteren werden sogenannte social media oder Unterhaltungsinformationen unterdrückt. Die Funktionsweise der Datenbrille kann durch das Starten eines speziellen Programmes auf der Datenbrille, das gegebenenfalls in Abläufe des Betriebssystems der Datenbrille eingreift, erreicht werden. Die Datenbrille wird in dieser vordefinierten Funktionsweise dazu verwendet fahrtrelevante Informationen, wie Geschwindigkeit, Zeit bis zum Ziel, Navigationshinweise, Warnhinweise von Fahrerassistenzsystemen, etc. anzuzeigen. Diese Informationen betreffen den Fahrtzustand des Fahrzeugs. Hierzu empfängt die Datenbrille die entsprechenden Daten von der Vorrichtung oder vom Fahrzeug.

Es kann vorgesehen sein, dass die Vorrichtung von der Datenbrille deren aktuelle Funktionsweise empfängt und diese mit einer gespeicherten Funktionsweise (der vordefinierten Funktionsweise) abgleicht. Sofern eine Übereinstimmung besteht, kann die Übertragung der fahrtrelevanten Daten beginnen.

In einer Implementierung ist die Vorrichtung ferner eingerichtet zum: Feststellen, dass der Sitzplatz, der der Datenbrille zugeordnet ist, der Fahrersitzplatz des Fahrzeugs ist; Feststellen, dass von der Datenbrille keine Angabe empfangen wurde, dass sich die Datenbrille in einer vordefinierten Funktionsweise befindet; Ausführen einer vordefinierten Funktion, insbesondere: Unterbinden der Übertragung von Nutzdaten, insbesondere Grafik- oder Videodaten, zu der Datenbrille; und/oder Verhindern des Starts der Kraftmaschine des Fahrzeugs; und/oder Veranlassen der Ausgabe eines akustischen und/oder optischen oder textbasierten Hinweises. Wenn also nicht sicher festgestellt werden kann, dass die Datenbrille vom Fahrer in einer an die Fahraufgabe angepassten Funktionsweise benutzt wird, so können mehrere Maßnahmen ergriffen werden. Ohne Datenübertragung zur Datenbrille wird die Gefahr der Ablenkung durch die Datenbrille sicher verringert. Die Verhinderung des Motorstarts ist sicher eine drastische Maßnahme. Ebenso kann die Ausgabe eines Hinweises über eine Anzeige oder Lautsprecher des Fahrzeugs vorgesehen sein.

### KURZE BESCHREIBUNG DER ZEICHNUNG

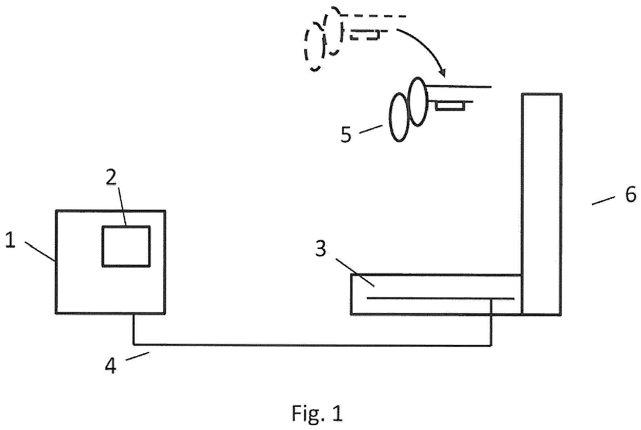

Fig. 1 zeigt schematisch eine Vorrichtung gemäß einem Ausführungsbeispiel.

### DETAILLIERTE BESCHREIBUNG DES AUSFÜHRUNGSBEISPIELS

Fig. 1 zeigt schematisch eine Vorrichtung gemäß einem Ausführungsbeispiel. Die Vorrichtung umfasst die elektronische Recheneinheit 1 inklusive einem Sende- und Empfangsmodul 2 für Bluetooth. Die Recheneinheit 1 ist über die Leitung 4 mit der Sitzmatte 3 gekoppelt, die dazu eingerichtet ist, die Belegung des Sitzes 6 eines Fahrzeugs (nicht gezeigt), zu erkennen. Ferner ist in Fig. 1 die Datenbrille 5 gezeigt. Die Datenbrille 5 umfasst Beschleunigungssensorik und ein Bluetooth Sende- und Empfangsmodul.

Im Betrieb überwacht die Datenbrille 5 ihre Bewegung mithilfe der Beschleunigungssensorik. Wird eine Bewegung erkannt, die auf ein Hinsetzen des Trägers (nicht gezeigt) der Datenbrille 1 hindeutet, wird dies über Bluetooth an die erfindungsgemäße Vorrichtung gemeldet. Eine Hinsetz-Bewegung wird durch die gestrichelte Datenbrille und den Pfeil in Fig. 1 angedeutet.

Gleichzeitig überwacht die elektronische Recheneinheit 1, ob die Sitzmatte 3 durch eine Person belegt wird. Wenn dies der Fall ist, wird der zugehörige Zeitpunkt aufgezeichnet. Ebenso wird der Zeitpunkt aufgezeichnet, zu dem von der Datenbrille der Belegungshinweis empfangen wird. Wenn beide Zeitpunkte weniger als 1 s auseinander liegen, wird die Datenbrille 5 dem Sitz 6 zugeordnet.

Der Sitz 6 ist der Fahrersitz des Fahrzeugs (nicht gezeigt). Folglich gibt das Fahrzeug einen Warnhinweis auf einer Anzeige aus, dass das Tragen von Datenbrillen beim Führen von Fahrzeugen zu gefährlichen Situationen führen kann.

## Patentansprüche

1. Vorrichtung für ein Fahrzeug zum Zuordnen einer Datenbrille (5) zu einem Sitzplatz (6) in dem Fahrzeug, umfassend:
Erkennungsmittel (3) zum Erkennen der Belegung eines Sitzplatzes (6) von mehreren Sitzplätzen des Fahrzeugs;
Eine Sende- und Empfangseinrichtung zum Übertragung von Daten von und zu Datenbrillen (5);
Elektronische Rechenmittel (1);
Wobei die Vorrichtung zu Folgendem eingerichtet ist:
Erkennen der Sitzbelegung, nämlich, dass der Sitzplatz (6) des Fahrzeugs von einer Person belegt wird;
Empfangen, von der Datenbrille (5), eines Belegungshinweises, nämlich eines Hinweises, dass eine Bewegung der Datenbrille (5) erkannt wurde, die darauf hindeutet, dass der Träger der Datenbrille (5) sich auf einen Sitzplatz (6) gesetzt hat;
Feststellen eines zeitlichen Zusammenhangs zwischen dem Erkennen der Sitzbelegung und dem Belegungshinweis;
Zuordnen der Datenbrille (5) zu dem Sitzplatz (6).

2. Vorrichtung nach Anspruch 1, wobei der zeitliche Zusammenhang darin besteht, dass das Erkennen der Sitzbelegung und das Empfangen des Belegungshinweises weniger als eine vorbestimmte Schwellwertzeit auseinanderliegen.

3. Vorrichtung nach einem der vorhergehenden Ansprüche, wobei die Erkennungsmittel eine Innenraumkamera, die zumindest auch auf den Sitzplatz (6) gerichtet ist, und/oder eine Sitzbelegungsmatte umfassen.

4. Vorrichtung nach einem der vorhergehenden Ansprüche, wobei die Vorrichtung ferner eingerichtet ist zum:
Feststellen, dass der Sitzplatz (6), der der Datenbrille (5) zugeordnet ist, der Fahrersitzplatz des Fahrzeugs ist;
Empfangen, von der Datenbrille (5), der Angabe, dass die Datenbrille (5) gemäß einer vordefinierten Funktionsweise arbeitet;
In Antwort auf das Empfangen der Angabe: Übertragen von Daten bezüglich der Funktion des Fahrzeugs zu der Datenbrille (5).

5. Vorrichtung nach einem der vorhergehenden Ansprüche, wobei die Vorrichtung ferner eingerichtet ist zum:
Feststellen, dass der Sitzplatz (6), der der Datenbrille (5) zugeordnet ist, der Fahrersitzplatz des Fahrzeugs ist;
Feststellen, dass von der Datenbrille (5) keine Angabe empfangen wurde,
dass die Datenbrille (5) gemäß einer vordefinierten Funktionsweise arbeitet;
Ausführen einer vordefinierten Funktion, insbesondere:
Unterbinden der Übertragung von Nutzdaten, insbesondere Grafik- oder Videodaten, zu der Datenbrille (5); und/oder Verhindern des Starts der Kraftmaschine des Fahrzeugs; und/oder Veranlassen der Ausgabe eines akustischen und/oder optischen oder textbasierten Hinweises.

6. Vorrichtung nach einem der Ansprüche 4 oder 5, wobei die vordefinierte Funktionsweise umfasst, dass die auf der Anzeige der Datenbrille (5) dargestellten Inhalte an die Anforderungen beim Führen eines Fahrzeugs angepasst sind.

7. Fahrzeug, umfassend eine Vorrichtung nach einem der vorhergehenden Ansprüche.

8. Datenbrille, zur Verwendung mit der Vorrichtung nach Anspruch 1, umfassend:
Eine Anzeige;
Eine Sende- und Empfangseinheit zur Datenübertragung;
Bewegungssensoren, insbesondere Beschleunigungssensoren;
Elektronische Rechenmittel;
Wobei die Datenbrille zu Folgendem eingerichtet ist:
Erkennen einer Bewegung der Datenbrille (5), die darauf hindeutet, dass sich der Träger der Datenbrille (5) hingesetzt hat;
In Antwort auf das Erkennen: Übertragen eines Belegungshinweises.

9. Datenbrille nach Anspruch 8, wobei die Datenbrille ferner zu Folgendem eingerichtet ist:
Einnehmen einer vordefinierten Funktionsweise;
Übertragen einer Angabe, dass die Datenbrille (5)gemäß der vordefinierten Funktionsweise arbeitet, mittels der Sende- und Empfangseinheit.

10. Datenbrille nach einem der Ansprüche 8 oder 9, wobei die Datenbrille (5) ferner zu Folgendem eingerichtet ist:
Empfangen von Daten des Fahrzeug zu dessen Fahrtzustand;
Anzeigen der Daten des Fahrzeugs.

## Claims

1. A device for a vehicle for assigning data eyeglasses (5) to a seat (6) in the vehicle, said device comprising:
detection mea ns (3) for detecting the occupancy of a seat (6) a mong a plurality of seats of the vehicle;
a transmitting and receiving unit for transmitting data from and to data eyeglasses (5);
electronic computing means (1);
wherein the device is configured for the following:
detecting the seat occupancy, namely, thatthe seat(6) of the vehicle is occupied by a person;
receiving, from the data eyeglasses (5), an occupancy indication, namely an indication that a movement of the data eyeglasses (5) has been detected, which indicates that the wearer of the data eyeglasses has sat down on a seat (6);
determining a temporal correlation between the detection of the seat occupancy and the occupancy indication;
assigning the data eyeglasses (5) to the seat (6).

2. A device according to claim 1, wherein the temporal correlation comprises the detection thatthe seat occupancy and the receiving of the occupancy indication are closer together than a predetermined threshold time.

3. A device according to either one of the preceding claims, wherein the detection means comprise an interior camera, which is at least also directed to the seat (6), and/or a seat occupancy mat.

4. A device according to any one of the preceding claims, wherein the device is also configured to:
determine that the seat(6) assigned to the data eyeglasses (5) is the drivers seat of the vehicle;
receive, from the data eyeglasses (5), a declaration that the data eyeglasses (5) are working in accordance with a predefined operating principle;
in response to the receipt of the declaration: transmitting data relating to the function of the vehicle to the data eyeglasses (5).

5. A device according to any one of the preceding claims, wherein the device is also designed to:
determine that the seat (6) which is assigned to the data eyeglasses (5) is the drivers seat of the vehicle;
determine that no declaration that the data eyeglasses (5) are working in accordance with a predefined operating principle has been received from the data eyeglasses (5);
perform a predefined function, more especially:
suppress the transmission of useful data, in particular graphic or video data, to the data eyeglasses (5); and/or
prevent the start of the engine of the vehicle; and/or
allow an acoustic and/or optical or text-based indication to be output.

6. A device according to either one of claims 4 or 5, wherein the predefined operating principle comprises the fact that content presented on the display of the data eyeglasses (5) is adapted to the requirements when driving a vehicle.

7. A vehicle, comprising a device according to any one of the preceding claims.

8. Data eyeglasses, for use with the device according to claim 1, comprising:
a display;
a transmitting and receiving unit for data transmission;
motion sensors, more especially acceleration sensors;
electronic computing means;
wherein the data eyeglasses are configured for the following:
detecting a movement of the data eyeglasses (5) which indicates that the wearer of the data eyeglasses (5) has sat down;
in response to the detection: transmitting an occupancy indication.

9. Data eyeglasses according to claim 8, wherein the data eyeglasses are also configured for the following:
adopting a predefined operating principle;
transmitting a declaration thatthe data eyeglasses (5) are working in accordance with the predefined operating principle, by means of the transmitting and receiving unit.

10. Data eyeglasses according to either one of claims 8 or 9, wherein the data eyeglasses (5) are also configured for the following:
receiving vehicle data relating to the travelling state of the vehicle;
displaying the vehicle data.

## Revendications

1. Dispositif destiné à un véhicule pour permettre d'associer des lunettes d'information (5) à une place assise (6) située dans le véhicule comprenant :
des moyens d'identification (3) permettant d'identifier l'occupation d'une place assise (6) parmi plusieurs places assises du véhicule,
un dispositif d'émission et de réception permettant de transmettre des données à partir et vers des lunettes d'information (5),
des moyens de calcul électronique (1),
le dispositif étant réalisé pour permettre :
d'identifier l'occupation du siège, à savoir le fait que la place assise (6) du véhicule est occupée par une personne,
de recevoir par les lunettes d'information (5) une indication d'occupation, à savoir une indication selon laquelle a été identifié un déplacement des lunettes d'information (5), qui signifie que le porteur des lunettes d'information (5) s'est assis sur une place assise (6),
de déterminer une relation chronologique entre l'identification de l'occupation du siège et l'indication d'occupation, et
d'associer les lunettes d'information (5) à la place assise (6).

2. Dispositif conforme à la revendication 1,
dans lequel la relation chronologique consiste en ce que l'identification de l'occupation du siège et la réception de l'indication d'occupation sont séparées l'une de l'autre de moins d'une durée de seuil prédéfinie.

3. Dispositif conforme à l'une des revendications précédentes,
dans lequel les moyens d'identification comportent une caméra d'habitacle interne qui est également au moins orientée sur la place assise (6) et/ou un tapis d'identification d'occupation de siège.

4. Dispositif conforme à l'une quelconque des revendications précédentes,
réalisé pour permettre :
de déterminer que la place assise (6) qui est associée aux lunettes d'information (5) est la place du conducteur du véhicule,
de recevoir à partir des lunettes d'information (5) une déclaration selon laquelle ces lunettes (5) travaillent conformément à un mode de fonctionnement prédéfini,
en réponse à la réception de la déclaration, de transmettre aux lunettes d'information des données relatives au fonctionnement du véhicule.

5. Dispositif conforme à l'une quelconque des revendications précédentes,
réalisé en outre pour permettre :
de déterminer que la place assise (6) qui est associée aux lunettes d'information (5) est la place du conducteur du véhicule,
de déterminer qu'aucune déclaration selon laquelle les lunettes d'information (5) travaillent conformément à un mode de fonctionnement préfini n'a été reçue par ces lunettes d'information (5),
mettre en oeuvre une fonction prédéfinie, à savoir :
couper la transmission de données utiles, en particulier de données graphiques ou vidéo aux lunettes d'information (5) et/ou empêcher le démarrage du moteur du véhicule et/ou provoquer la délivrance d'une information acoustique et/ou optique et/ou basée sur un texte.

6. Dispositif conforme à l'une des revendications 4 ou 5,
**caractérisé en ce que**
le mode de fonctionnement prédéfini comporte le fait que les données d'information représentées sur l'organe d'affichage des lunettes d'information (5) sont adaptées aux demandes lors de la conduite d'un véhicule.

7. Véhicule comprenant un dispositif conforme à l'une quelconque des revendications précédentes.

8. Lunettes d'information destinées à être utilisées avec un dispositif conforme à la revendication 1 comprenant :
un organes d'affichage,
une unité d'émission et de réception permettant la transmission de données,
des capteurs de mouvement, en particulier des capteurs d'accélération,
des moyens de calcul électronique,
les lunettes d'information étant réalisées pour permettre :
d'identifier un déplacement de celles-ci qui signifie que leur porteur s'est assis,
en réponse à cette identification de transmettre une indication d'occupation.

9. Lunettes d'information conformes à la revendication 8, réalisées en outre pour permettre :
de mettre en oeuvre un mode de fonctionnement prédéfini,
de transmettre une déclaration selon laquelle les lunettes d'information (5) travaillent conformément au mode de fonctionnement prédéfini au moyen de l'unité d'émission et de réception.

10. Lunettes d'information conformes à l'une des revendications 8 à 9, réalisées en outre pour permettre :
de recevoir des données relatives à l'état de conduite du véhicule,
afficher ces données du véhicule.
